(19) Europäisches Patentamt
European Patent Office
Office européen des brevets

(11) EP 0 461 072 B1

(12) **EUROPÄISCHE PATENTSCHRIFT**

(45) Veröffentlichungstag und Bekanntmachung des Hinweises auf die Patenterteilung:
**29.07.1998 Patentblatt 1998/31**

(51) Int Cl.6: **C08K 5/00**, C08K 5/13, C08K 5/18, C08K 5/37, C08K 5/46, C08L 75/04

(21) Anmeldenummer: **91810405.0**

(22) Anmeldetag: **29.05.1991**

(54) **Verfahren zur Herstellung von Polyurethanstoffen unter Verwendung von spezifischen Stabilisatorsystemen**

Process for the preparation of polyurethanes using specific stabilizer systems

Procédé de préparation des polyuréthanes utilisant des systèmes de stabilisants spécifiques

(84) Benannte Vertragsstaaten:
**DE FR GB IT**

(30) Priorität: **07.06.1990 CH 1906/90**

(43) Veröffentlichungstag der Anmeldung:
**11.12.1991 Patentblatt 1991/50**

(73) Patentinhaber: **Ciba Specialty Chemicals Holding Inc.**
**4057 Basel (CH)**

(72) Erfinder: **Michaelis, Peter, Dr.**
**W-7800 Freiburg (DE)**

(56) Entgegenhaltungen:
**EP-A- 0 059 168**
**EP-A- 0 165 209**
**EP-A- 0 224 442**
**GB-A- 2 244 275**
**US-A- 4 265 783**
**US-A- 4 914 137**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 461 072 B1

Printed by Jouve, 75001 PARIS (FR)

## Beschreibung

Die vorliegende Erfindung betrifft ein Verfahren zur Herstellung von Polyurethanstoffen in an sich beliebiger Form unter Verwendung von Stabilisatorsystemen, die mindestens zwei Verbindungen aus mindestens zwei strukturell verschiedenen spezifischen Stabilisatortypen enthalten, sowie die Verwendung dieser Systeme als Stabilisatoren bei der Herstellung von Polyurethanen und für die dazu benötigten Polyole.

Polyurethane sind eine umfangreiche Gruppe von Polymeren sehr unterschiedlicher Zusammensetzung mit vielfältigem Eigenschaftsbild und als Massenprodukte in verschiedenartigen Anwendungen wohl bekannt, wobei darunter die Polyurethan-Schaumstoffe eine besondere Stellung eingenommen haben. Polyurethane haben in den verschiedensten Gebieten, wie z.B. im Möbel-, Automobil- und Textilgebiet oder im Verpackungs-, Haushalt-, Lärmbekämpfungs- und Wärmedämmungssektor Anwendung gefunden.

Polyurethanstoffe werden grosstechnisch durch Umsetzung von Di- oder Polyisocyanaten mit Di- oder Polyhydroxyverbindungen unter Mitverwendung von Stabilisatoren und weiteren an sich bekannten Zusatzstoffen, gegebenenfalls von Treibmitteln gewonnen. Oft werden sie aus Zweikomponentensystemen hergestellt, indem die eine Komponente die Hydroxyverbindung einschliesslich aller für die Verarbeitung notwendigen Hilfsstoffe, wie z.B. Katalysatoren, Stabilisatoren, Flammschutzmittel, Emulgatoren, gegebenenfalls auch Treibmittel, darstellt und die zweite Komponente das Isocyanat ist.

Als bei der Herstellung von Polyurethanen eingesetzte Stabilisatoren spielen die Antioxidantien eine wichtige Rolle, indem sie insbesondere zur Stabilisierung der oxidationsempfindlichen Polyole und/oder zur Verhinderung der sogenannten Kernverfärbung/-verbrennung (Scorching) bei der Herstellung von Schaumstoffen eingesetzt werden. Zu den oft vorgeschlagenen Antioxidantien gehören z.B. alkylierte Aniline, Phosphite, Sulfide, Thioether oder sterisch gehinderte Phenole, wie insbesondere 2,6-Di-tert.-butyl-4-methylphenol. EP-A-0 059 168 beschreibt Phenol mercapto carbon säureester als Stabilisatoren für organische Polymer wie z.B. Polyurethane. Als Coadditive werden z.B. Alkylierte Monophenole und hydroxilierte Thiodiphenyläther genannt. In EP-A-0 224 442 werden 2,4-Alkylthiomethylphenol verbindungen als Stabilisatoren für Elastomere und Klebrigmachende Harze beschrieben. Als Additive werden u.a. alkylierte Monophenole und hydroxilierte Thiodiphenyläther genannt. Auch Kombinationen spezifischer Antioxidantien wurden bereits vorgeschlagen, wie z.B. Gemische von sterisch gehinderten Phenolen (vgl. z.B. US 3,280,049,

US 4,007,234, US 4,494,880) oder Gemische von sterisch gehinderten Phenolen mit spezifischen Diphenylaminen (vgl. z.B. US 4,070,304, US 4,265,783, US 4,275,173 und US 4 021 385). Die dort vorgeschlagenen Stabilisatoren bzw. Stabilisatorgemische erfüllen jedoch nicht die hohen Anforderungen der Praxis.

Es wurde nunmehr gefunden, dass sich Gemische spezifischer Stabilisatortypen hervorragend als Antioxidantien bei der Herstellung von Polyurethanstoffen in an sich beliebiger Form, insbesondere Schaumstoffen, eignen.

Die vorliegende Erfindung betrifft demnach ein Verfahren zur Herstellung von Polyurethanstoffen durch Umsetzung von

a) Polyisocyanaten mit

b) Verbindungen enthaltend mindestens zwei gegenüber Isocyanaten reaktionsfähige Wasserstoffatome, in Gegenwart von

c) an sich bekannten Katalysatoren und

d) spezifischen Stabilisatorsystemen,

dadurch gekennzeichnet, dass als Komponente d) ein Stabilisatorsystem eingesetzt wird, das mindestens zwei Verbindungen aus mindestens zwei strukturell verschiedenen Stabilisatortypen der Formeln (1) und (2) und/oder (3) und/oder (4) enthält, wobei die Formel (1) für die Formeln (1a), (1b), (1c), (1d) oder (1e)

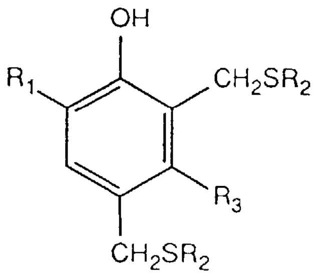 , 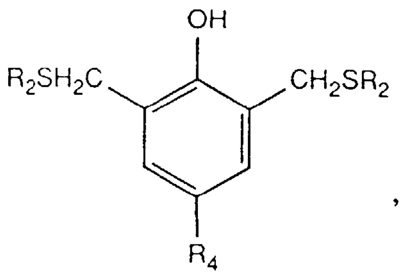 , 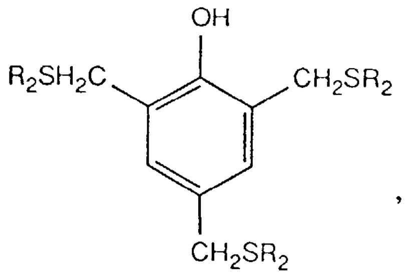 ,

(1a) (1b) (1c)

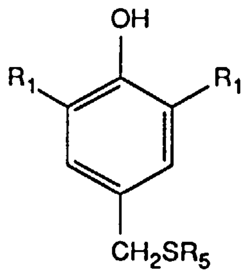 , 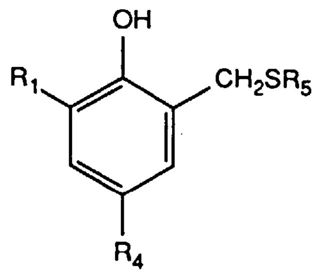

(1d) (1e)

steht, und die übrigen Formeln (2), (3) und (4) wie folgt sind:

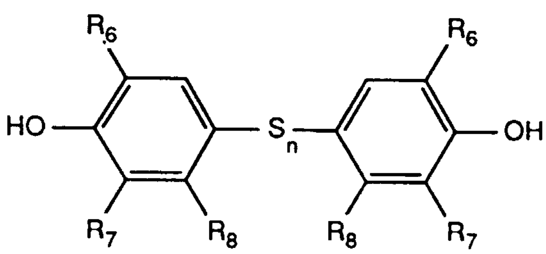 , 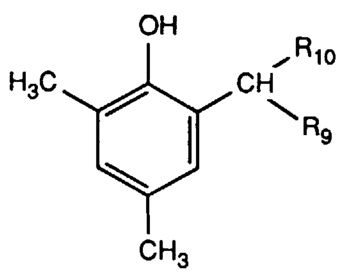 , Ar-NH-Ar' ,

(2) (3) (4)

worin

$R_1$ unabhängig voneinander $C_1$-$C_4$-Alkyl, $R_2$ und $R_5$ unabhängig voneinander $C_1$-$C_{18}$-Alkyl, $C_5$-$C_7$-Cycloalkyl, Benzyl, Phenyl oder eine Gruppe der Formel $-CH_2COO-C_6$-$C_{18}$-Alkyl, $R_3$ -H oder $-CH_3$, und $R_4$ $C_1$-$C_{12}$-Alkyl bedeuten, $R_6$ und $R_8$ unabhängig voneinander $C_1$-$C_{18}$-Alkyl oder $C_5$-$C_7$-Cycloalkyl, $R_7$ unabhängig voneinander -H, $C_1$-$C_4$-Alkyl oder $C_5$-$C_7$-Cycloalkyl, n die Zahl 1, 2 oder 3, $R_9$ $C_6$-$C_{18}$-Alkyl und $R_{10}$ Methyl oder Ethyl bedeuten, und Ar und Ar' unabhängig voneinander für einen Rest der Formeln

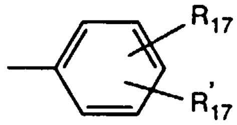 , 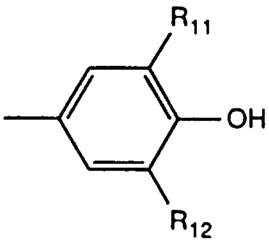 oder 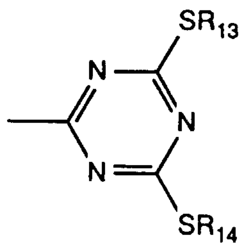

stehen, oder Ar-NH-Ar' für einen Rest der Formel

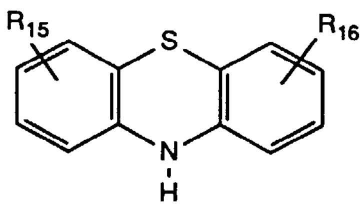

steht, worin $R_{17}$ und $R_{17}$' unabhängig voneinander -H oder $C_4$-$C_{18}$-Alkyl, $R_{11}$ und $R_{12}$ unabhängig voneinander $C_1$-$C_4$-Alkyl, $R_{13}$ und $R_{14}$ unabhängig voneinander $C_4$-$C_{18}$-Alkyl, und $R_{15}$ und $R_{16}$ unabhängig voneinander -H oder $C_1$-$C_{12}$-Alkyl bedeuten.

$C_1$-$C_4$-Alkyl in den obigen Substituenten bedeutet beispielsweise Methyl, Ethyl, n-Propyl, Isopropyl, n-Butyl, sek.-Butyl oder tert.-Butyl.

$C_1$-$C_{18}$-Alkyl in den obigen Substituenten kann geradkettig oder verzweigt sein und bedeutet beispielsweise Methyl, Ethyl, n-Propyl, Isopropyl, n-Butyl, sek.-Butyl, tert.-Butyl, n-Pentyl, tert.-Pentyl, n-Hexyl, n-Octyl, 2-Ethylhexyl, n-Decyl, 1,1,3,3-Tetramethylbutyl, 1,1,3,3-Tetramethylhexyl, n-Undecyl, n-Dodecyl oder 1,1,3,3,5,5-Hexamethylhexyl, n-Tridecyl, n-Tetradecyl, n-Hexadecyl und n-Octadecyl.

$R_4$, $R_{15}$ und $R_{16}$ als $C_1$-$C_{12}$-Alkyl können geradkettig oder verzweigt sein und bedeuten z.B. Methyl, Ethyl, n-Propyl, Isopropyl, n-Butyl, sek.-Butyl, tert.-Butyl, n-Pentyl, tert.-Pentyl, n-Hexyl und die oben für $C_1$-$C_{18}$-Alkyl angegebenen entsprechenden Beispiele.

$C_6$-$C_{18}$-Alkyl als $R_9$ oder in der Gruppe der Formel $-CH_2COO-C_6$-$C_{18}$-Alkyl kann geradkettig oder verzweigt sein und bedeutet z.B. n-Octyl, Isooctyl, n-Decyl, n-Dodecyl, n-Tridecyl, n-Tetradecyl, 1,1,3,3-Tetramethyloctyl, 2-Ethylhexyl, 1,1,3,3,5,5-Hexamethyldecyl, 1,1,5,5,9,9-Hexamethyldecyl, n-Hexadecyl und n-Octadecyl. Bevorzugt ist n-Octyl, n-Dodecyl, n-Tridecyl, n-Tetradecyl, n-Hexadecyl und n-Octadecyl.

$R_{13}$, $R_{14}$, $R_{17}$ und $R_{17}$' als $C_4$-$C_{18}$-Alkyl können geradkettig oder verzweigt sein und z.B. die gleiche oben für $C_6$-$C_{18}$ angegebene Bedeutung haben, ferner n-Butyl, sek.-Butyl, tert.-Butyl, n-Pentyl und tert.-Pentyl.

$C_5$-$C_7$-Cycloalkyl in den obigen Substituenten ist z.B. Cyclopentyl und insbesondere Cyclohexyl.

$R_2$ ist bevorzugt $C_8$-$C_{12}$-Alkyl.

$R_6$ und $R_8$ sind bevorzugt $C_1$-$C_{12}$-Alkyl, ganz besonders bevorzugt aber $C_1$-$C_4$-Alkyl.

$R_7$ ist bevorzugt -H, $R_8$ stellt bevorzugt $-CH_3$ dar.

$R_{10}$ ist bevorzugt Methyl.

In der Formel (2) stellt n bevorzugt die Zahl 1 dar.

Die Verbindungen der Formeln 1a bis 1e, 2, 3 und 4 sind bekannte Verbindungen und können nach an sich bekannten Verfahren hergestellt werden.

Als Beispiele für Vertreter von Verbindungen der Formel 1a seien die nachfolgend aufgezählten Substanzen erwähnt:
2,4-Bis(n-octylthiomethyl)-6-methyl-phenol, 2,4-Bis(tert.-octylthiomethyl)-6-methyl-phenol, 2,4-Bis(tert.-dodecylthiomethyl)-6-methyl-phenol, 2,4-Bis(n-octyl-thiomethyl)-3,6-dimethyl-phenol, 2,4-Bis(n-octylthiomethyl)-6-tert.-butyl-phenol, 2,4-Bis(n-dodecylthiomethyl)-6-tert.-butyl-phenol, 2,4-Bis(n-octylthiomethyl)-6-tert.-butyl-3-methyl-phenol und 2,4-Bis(n-dodecylthiomethyl)-6-tert.-butyl-3-methylphenol, oder Gemische davon.

Erfindungsgemäss bevorzugt gemäss Formel Ia bedeuten R1 tert.-Butyl oder insbesondere $-CH_3$, $R_2$ Octyl und $R_3$ $-CH_3$ und besonders -H. Octyl bedeutet n-Octyl oder verzweigtes Octyl. Ganz bevorzugt ist 2,4-Bis(n-octylthiomethyl)-6-methyl-phenol.

In der Formel 1b bedeuten $R_2$ bevorzugt geradkettiges oder verzweigtes $C_8$-$C_{12}$-Alkyl und $R_4$ geradkettiges oder verzweigtes Nonyl.

Erfindungsgemäss bevorzugt gemäss Formel 1c bedeutet $R_2$ unabhängig voneinander geradkettiges oder verzweigtes $C_8$-$C_{12}$-Alkyl.

In der Formel 1d bedeuten $R_1$ bevorzugt tert.-Butyl und $R_5$ geradkettiges oder verzweigtes Octyl.

In der Formel 2 sind Substituenten mit gleichen Indices vorzugsweise gleich. $R_7$ ist bevorzugt -H und $R_8$ -$CH_3$; ganz bevorzugt bedeuten $R_6$ $C_1$-$C_4$-Alkyl, $R_7$ -H, $R_8$ Methyl und n die Zahl 1.

$R_9$ in der Formel 3 bedeutet bevorzugt geradkettiges oder verzweigtes $C_{14}$- oder $C_{16}$-Alkyl.

Die Formel 4 entspricht bevorzugt den folgenden Formeln

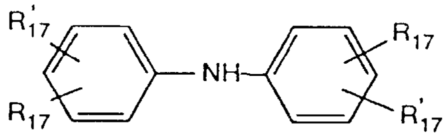

und

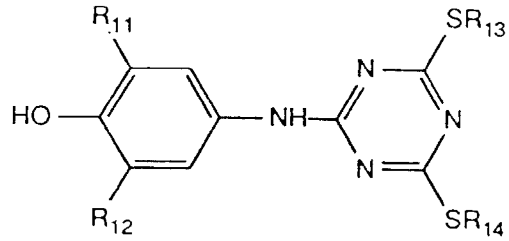

,

worin die $R_{17}$ und $R_{17}'$ gleich oder verschieden sind und $C_4$-$C_8$-Alkyl bedeuten, $R_{11}$ und $R_{12}$ tert.-Butyl und $R_{13}$ und $R_{14}$ geradkettiges oder verzweigtes Octyl bedeuten. Ganz bevorzugt bedeuten die beiden Gruppen $R_{17}$ und $R_{17}'$ unabhängig voneinander tert.-Butyl und/oder tert.-Octyl.

Erfindungsgemäss bevorzugte Stabilisatorsysteme enthalten mindestens zwei Verbindungen aus zwei Stabilisatortypen der Formeln 1a und 2 oder 1a und 4, ganz bevorzugt aber der Formeln 1a und 2.

Das Verhältnis der verschiedenen Komponenten im Stabilisatorgemisch kann beliebig variieren. Bevorzugt wird das Verhältnis so eingestellt, dass die Gemische flüssig sind. Wenn eine oder mehrere Komponenten des Gemisches fest ist/sind, so wird zweckmässig mindestens eine flüssige Komponente in genügender Menge eingesetzt, so dass die festen Komponenten im Gemisch gelöst vorliegen.

Beispiele für das Verhältnis der beiden Stabilisatorkomponenten sind 9:1 bis 1:9, insbesondere 1:4 bis 4:1, vor allem 1:3 bis 3:1. Bei mehrkomponentigen Stabilisatorsystemen gelten diese Grenzen sinngemäss.

Besonders zweckmässig inkorporiert man die Stabilisatorysteme in die Komponente b) bei der Polyurethanherstellung.

Die Konzentration der anmeldungsgemässen Stabilisatorgemische in den in Frage kommenden Komponenten a) oder b) kann beliebig variieren; für die Komponente b) liegt sie zweckmässig zwischen 0,01 bis 1 Gew%, bevorzugt zwischen 0,2 und 0,6 Gew.%, bezogen auf das Polyol (Komponente b).

Gegenstand der Erfindung sind auch stabilisierte Zusammensetzungen enthaltend

A) einen Polyurethanstoff und

B) ein Stabilisatorsystem das mindestens zwei Verbindungen aus mindestens zwei strukturell verschiedenen Stabilisatortypen der Formeln 1 und 2 und/oder 3 und/oder 4 enthält wie sie oben definiert sind.

Erfindungsgemäss in Frage kommende Polyurethane sind Zwei-Komponentensysteme aus Polyisocyanaten und mindestens zwei gegenüber Isocyanaten reaktionsfähige Wasserstoffatome enthaltenden Verbindungen.

Als erfindungsgemäss einzusetzende Polyisocyanate (Komponente a) kommen aliphatische, cycloaliphatische, araliphatische, aromatische und heterocyclische Polyisocyanate in Betracht, beispielsweise Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3-und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenyl-polymethylen-polyisocyanate, wie sie durch Anilin-Formaldehyd-Kondensation und anschliessende Phosgenierung erhalten werden, m- und p-Isocyanatophenylsulfonyl-isocyanate, perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate, Estergruppen aufweisende Polyisocyanate, Umsetzungsprodukte der obengenannten Isocyanate mit Acetalen, und polymere Fettsäurereste enthaltende Polyisocyanate.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschliessende Phosgenierung hergestellt werden ("rohes MDI"), und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Erfindungsgemäss einzusetzende Komponenten b) sind Verbindungen mit mindestens zwei gegenüber Isocyanaten reaktionsfähigen Wasserstoffatomen mit einem Molekulargewicht in der Regel von 400-10 000. Hierunter versteht man neben Amino-, Thiol- oder Carboxylgruppen aufweisenden Verbindungen vorzugsweise Polyhydroxylverbindungen, insbesondere zwei bis acht Hydroxylgruppen aufweisende Verbindungen, speziell solche vom Molekulargewicht 800 bis 10 000, vorzugsweise 1000 bis 6000, z.B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Oelsäure, gegebenenfalls in Mischung mit monomeren Fettsäuren, Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol(1,4-Bis-hydroxymethylcyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Polyethylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Auch die erfindungsgemäss in Frage kommenden, mindestens zwei, in der Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) und -(1,2), Trimethylolpropan, 4,4'-Dihydroxy-diphenylpropan, Anilin, Ethanolamin oder Ethylendiamin hergestellt. Auch Sucrosepolyether kommen erfindungsgemäss in Frage. Vielfach sind solche Polyether bevorzugt, die überwiegend (bis zu 90 Gew.-%, bezogen auf die alle vorhandenen OH-Gruppen im Polyether) primäre OH-Gruppen aufweisen. Auch durch Vinylpolymerisate modifizierte Polyether, wie sie z.B. durch Polymerisation von Styrol und Acrylnitril in Gegenwart von Polyethern entstehen, sind geeignet, ebenso OH-Gruppen aufweisende Poybutadiene.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischether, Polythioetherester oder Polythioetheresteramide.

Als Polyacetale kommen z.B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale lassen sich erfindungsgemäss geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen, hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehydharze oder auch an Harnstoff-Formaldehydharze sind erfindungsgemäss einsetzbar.

Selbstverständlich können Mischungen der obengenannten Verbindungen enthaltend mindestens zwei gegenüber Isocyanaten reaktionsfähige Wasserstoffatome, insbesondere mit einem Molekulargewicht von 400-10 000, z.B. Mischungen von Polyethern und Polyestern, eingesetzt werden.

Als erfindungsgemäss - gegebenenfalls im Gemisch mit den genannten höhermolekularen Verbindungen - einzusetzende Komponenten b) kommen auch Verbindungen mit mindestens zwei gegenüber Isocyanaten reaktionsfähigen Wasserstoffatomen mit einem niedrigen Molekulargewicht, z.B. zwischen 32-400, in Frage. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

Als Beispiele für derartige Verbindungen seien genannt: Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glyzerin, Trimethylolpropan, Hexantriol-(1,2,6), Trimethylolethan, Pentaerythrit, Chinit, Mannit, Sorbit, Diethylenglykol, Triethylenglykol, Tetraethylenglykol, Polyethylenglykole mit einem Molekulargewicht bis 400, Dipropylenglykol, Polypropylenglykole mit einem Molekulargewicht bis 400, Dibutylenglykol, Polybutylenglykole mit einem Molekulargewicht bis 400, 4,4'-Dihydroxydiphenylpropan, Dihydroxymethyl-hydrochinon, Ethanolamin, Diethanolamin, Triethanolamin, 3-Aminopropanol, Ethylendiamin, 1,3-Diaminopropan, 1-Mercapto-3-aminopropan, 4-Hydroxy- oder -Amino-phthalsäure, Bernsteinsäure, Adipinsäure, Hydrazin, N,N'-Dimethylhydrazin, 4,4'-Diaminodiphenylmethan, Toluylendiamin, Methylen-bis-chloranilin, Methylen-bis-anthranilsäureester Diaminobenzoesäureester und die isomeren Chlorphenylendiamine.

Auch in diesem Fall können Mischungen von verschiedenen Verbindungen mit mindestens zwei gegenüber Isocyanaten reaktionsfähigen Wasserstoffatomen mit einem Molekulargewicht von 32-400 verwendet werden.

Erfindungsgemäss bevorzugte Polyhydroxyverbindungen sind Hydroxylgruppen aufweisende verzweigte oder lineare Polyester, wie z.B. Kondensate von Adipinsäure und Phthalsäure mit einem Ueberschuss an Diolen und Triolen bzw. an Diolen, ferner Polyacetale, Polyether, wie z.B. Polytetrahydrofuran, und Polythioether-Adiprene.

Als Katalysatoren (Komponente c) werden an sich bekannte Katalysatoren verwendet, wie z.B. tertiäre Amine, wie Triethylamin, Tributylamin, N-Methyl-morpholin, N-Ethylmorpholin, N-Cocomorpholin, N,N,N',N'-Tetramethyl-ethylendiamin, 1,4-Diazabicyclo-(2,2,2)-octan, N-Methyl-N'-dimethylaminoethyl-piperazin, N,N-Dimethylbenzylamin, Bis-(N,N-diethylaminoethyl)-adipat, N,N-Diethylbenzylamin, Pentamethyldiethylentriamin, N,N-Dimethylcyclohexylamin, N,N,N',N'-Tetramethyl-1,3-butandiamin, N,N-Dimethyl-β-phenylethylamin, 1,2-Dimethylimidazol und 2-Methylimidazol, ferner an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol.

Gegenüber Isocyanatgruppen aktive Wasserstoffatome aufweisende tertiäre Amine als Katalysatoren sind z.B. Triethanolamin, Triisopropanolamin, N-Methyldiethanolamin, N-Ethyl-diethanolamin, N,N-Dimethyl-ethanolamin, sowie deren Umsetzungsprodukte mit Alkylenoxiden, wie Propylenoxid und/oder Ethylenoxid.

Als weitere Katalysatoren kommen ferner Silaamine mit Kohlenstoff-Silizium-Bindungen in Frage, wie z.B. 2,2,4-Trimethyl-2-silamorpholin und 1,3-Diethylaminomethyltetramethyl-disiloxan, ferner stickstoffhaltige Basen, wie Tetraalkylammoniumhydroxide, ferner Alkalihydroxide, wie Natriumhydroxid, Alkaliphenolate, wie Natriumphenolat oder Alkalialkoholate, wie Natriummethylat, oder Hexahydrotriazine, ferner organische Metallverbindungen, insbesondere organische Zinnverbindungen, z.B. Zinn(II)-salze von Carbonsäure wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat. Selbstverständlich können alle obengenannten Katalysatoren als Gemische eingesetzt werden.

Das erfindungsgemässe Verfahren wird bevorzugt zur Herstellung von Polyurethanschaumstoffen, zweckmässig unter Verwendung von Treibmitteln eingesetzt.

Erfindungsgemäss können als Treibmittel Wasser und/oder leicht flüchtige organische Substanzen mitverwendet werden. Als organische Treibmittel kommen z.B. Aceton, Ethylacetat, halogensubstituierte Alkane, wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage. Eine Treibwirkung kann auch durch Zusatz von Verbindungen, die sich bei Temperaturen über Raumtemperatur unter Abspaltung von Gasen, beispielsweise von Stickstoff, zersetzen, z.B. Azoverbindungen wie Azoisobuttersäurenitril, erzielt werden.

Erfindungsgemäss können gegebenenfalls weitere an sich bekannte Zusatzstoffe, wie z.B. oberflächenaktive Zusatzstoffe, wie Emulgatoren und Schaumstabilisatoren, mitverwendet werden.

Als Emulgatoren kommen z.B. die Natriumsalze von Ricinusölsulfonaten oder Salze von Fettsäuren mit Aminen,

wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure, oder von Fettsäuren, wie Ricinolsäure, oder von polymeren Fettsäuren, können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist.

Als weitere Zusatzstoffe können ferner auch Reaktionsverzögerer, z.B. sauer reagierende Stoffe, wie Salzsäure oder organische Säurehalogenide, ferner Zellregler der an sich bekannten Art, wie Paraffine oder Fettalkohole, oder Dimethylpolysiloxane sowie Pigmente oder Farbstoffe und Flammschutzmittel der an sich bekannten Art, z.B. Trischlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe, wie Bariumsulfat, Kieselgur, Russ oder Schlämmkreide, mitverwendet werden.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistisch und bakteriostatisch wirksamen Substanzen sowie Einzelheiten über Verwendungs- und Wirkungsweise dieser Zusatzmittel sind dem Fachmann wohl bekannt.

Nach dem erfindungsgemässen Verfahren können Polyurethanstoffe in an sich beliebiger Form, wie z.B. Gegenstände beliebiger Form sowie Fasern, hergestellt werden. Bevorzugt aber können Schaumstoffe hergestellt werden, wobei bei geeigneter Wahl der Komponenten entweder elastische oder starre Schaumstoffe bzw. auch alle zwischen diesen Extremen liegenden Produkte erhalten werden können.

Polyurethanschaumstoffe werden bevorzugt aus flüssigen Ausgangskomponenten hergestellt, wobei die miteinander umzusetzenden Ausgangsmaterialien entweder in einem Einstufenverfahren zusammengemischt werden oder aber zunächst ein NCO-Gruppen aufweisendes Voraddukt aus einem Polyol und einem Ueberschuss an Polyisocyanat hergestellt wird, das dann, z.B. durch Reaktion mit Wasser, verschäumt wird.

Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, welche dem Fachmann gut bekannt sind.

Bei der Schaumstoffherstellung wird die Verschäumung oft in Formen durchgeführt. Dabei wird das Reaktionsgemisch in eine Form eingetragen. Als Form material kommt Metall, z.B. Aluminium, oder Kunststoff, z.B. Epoxidharz, in Frage. In der Form schäumt das schaumfähige Reaktionsgemisch auf und bildet den Formkörper. Die Formverschäumung kann dabei so durchgeführt werden, dass das Formteil an seiner Oberfläche Zellstruktur aufweist, es kann aber auch so durchgeführt werden, dass das Formteil eine kompakte Haut und einen zelligen Kern aufweist. Man kann in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet.

Bei der Formverschäumung werden vielfach an sich bekannte "äussere Trennmittel", wie Siliconöle, mitverwendet. Man kann aber auch sogenannte "innere Trennmittel", gegebenenfalls im Gemisch mit äusseren Trennmitteln, verwenden.

Erfindungsgemäss lassen sich auch kalthärtende Schaumstoffe herstellen.

Selbstverständlich können aber auch Schaumstoffe durch Blockverschäumung oder nach dem an sich bekannten Doppeltransportbandverfahren hergestellt werden.

Mit dem erfindungsgemässen Verfahren können flexible, semiflexible oder harte Polyurethanschaumstoffe hergestellt werden. Sie finden die an sich bekannte Verwendung für derartige Produkte, z.B. als Matratzen und Polsterungsmaterial in der Möbel- und Automobilindustrie, ferner zur Herstellung von Armaturen, wie sie in der Automobilindustrie angewendet werden und schliesslich als Dämmittel und Mittel zur Wärme- bzw. Kälteisolierung, z.B. im Bausektor oder in der Kühlmöbelindustrie oder in der Textilindustrie z.B. als Achselstücke.

Die erfindungsgemässen Stabilisatorsysteme weisen mehrere Vorteile auf: Flüssige Gemische können problemlos hergestellt werden, was eine einfache und rasche Eindosierung in die Komponente b) ermöglicht. Im Gegensatz zum oft verwendeten Antioxidans 2,6-Ditert.-butyl-4-methylphenol sind derartige Gemische deutlich weniger flüchtig, besser migrations-, gasfadings- und lagervergilbungsbeständig. Ferner sind sie ausgezeichnete Antioxidantien, indem sie Verfärbungserscheinungen bei der Polyurethanherstellung verhindern.

Ausserdem schützen sie die oxidationsempfindliche Komponente b), insbesondere die bevorzugt als solche verwendeten Polyole, ausgezeichnet gegen oxidativen Abbau, so dass sie als Antioxidantien zur Stabilisierung dieser Komponente bereits vor ihrem Einsatz im erfindungsgemässen Verfahren, z.B. vor oder während des Destillationsprozesses, der anschliessend an die Herstellung der Polyole üblicherweise durchgeführt wird, oder bei deren Lagerung, verwendet werden können. Auch diese Verwendung stellt einen weiteren Gegenstand der vorliegenden Erfindung dar.

Die nachfolgenden Beispiele erläutern die Erfindung weiter. In den Beispielen genannte Prozente und Teile sind

Gewichtsprozente und -teile.

Beispiele 1-3 (Polyether-Polyurethan-Weichschäume sowie deren Stabilisierung):

In 157 g eines antioxidansfreien Polyether-Polyols (trifunktionelles Polyether-Polyol mit primären Hydroxylgruppen; Hydroxylzahl 35 mg KOH/g, Wassergehalt unter 0,1 %, Säurezahl unter 0,1 mg KOH/g) werden genau 470 mg (0,3 %, bezogen auf das Polyol) eines erfindungsgemässen Stabilisatorgemisches A, B, C, D oder E gelöst. (Die Stabilisatorgemische A, B, C, D und E sind in der Tabelle 2 definiert). Dazu gibt man 10,24 g einer Lösung aus 1,74 g ®TECOSTAB [Polysilicon der Firma Goldschmidt, DE], 0,48 g Diazabicyclooctan [Aminkatalysator] und 0,8 g Wasser und rührt intensiv bei 100 U/Min während 60 Sekunden.

Dann gibt man 3,2 g einer Lösung aus 0,32 g Zinnoctoat (Katalysator) in 2,9 g des obigen Polyols zu und rührt wiederum intensiv 60 Sek. bei 100 U/min. Sofort fügt man unter intensivem Rühren 98 g eines Isocyanats (®Lupranol T80 der Firma Bayer; Toluylen-2,4-und -2,6-diisocyanatgemisch) hinzu, giesst nach 6 Sek. in eine ausgekleidete Form und misst die Exothermtemperatur während des Aufschäumens zu einem Schaumblock.

Die Schaumblöcke werden 24 Stunden in einer Klimakammer bei 5 °C abgekühlt und gelagert. Aus der Mitte der Blöcke werden 2 cm dicke Scheiben ausgesägt und aus diesen mittels eines Bohrwerkzeugs runde (zylinderförmige) Prüfmuster herausgeschnitten. Die Muster werden in einem Reagenzglas unter Luftzutritt bei 190 °C in einem vorgeheizten Alu-Block-Thermostaten gealtert.

An diesen Proben wird nach ASTM 1925 die Vergilbung als Yellowness Index (YI) bestimmt.

Die Oxidationsbeständigkeit des stabilisierten Polyetherpolyols wird durch Messung des DSC-Wertes (Differential Scanning Calorimetry, temperaturgesteuerte Kalorimetrie) bestimmt. Dazu werden 20 mg des Polyols in einen Aluminium-Tiegel eingewogen und bei einer Starttemperatur von 50 °C mit einer Aufheizrate von 5 °C/min erhitzt. Der Beginn der exotherm verlaufenden Oxidation wird über eine temperaturgesteuerte Messung gegen eine unstabilisierte Referenzsubstanz kalorimetrisch bestimmt. Angegeben wird die Temperatur, bei welcher die Oxidation beginnt, sowie die Temperaturdifferenz ($\Delta T$) zwischen der für die jeweiligen stabilisierten Proben gemessenen Temperatur und der entsprechenden Temperatur des unstabilisierten Polyols. Hohe Werte bedeuten hohe Oxidationsbeständigkeit.

Die Ergebnisse sind in der nachfolgenden Tabelle 1 zusammengefasst.

Tabelle 1

| Bsp. Nr. | Stabilisatorgemisch | Konzentr. in %, bez. auf Polyol | YI nach Ofenalterung: | | | | | | | | | Oxidationsbeständigkeit gemäss DSC-Methode | |
|---|---|---|---|---|---|---|---|---|---|---|---|---|---|
| | | | 0 | 10 | 20 | 30 | 40 | 60 | 90 | 120 | 180 (Min.) | T(°C) | ΔT |
| 1 | A | 0,3 | -0,9 | 1,0 | 0,9 | 1,6 | 2,4 | 2,9 | 3,7 | 8,0 | 25 | | |
| 2 | B | 0,3 | -0,8 | 1,4 | 1,4 | 1,5 | 2,5 | 3,5 | 4,7 | 7,4 | 23 | 177 | 49 |
| 3 | C | 0,3 | -0,9 | 1,7 | 1,4 | 1,9 | 2,7 | 4,7 | 9,3 | 23 | | 164 | 36 |
| 4 | D | 0,3 | -0,8 | - | 0,8 | 1,1 | 1,6 | 2,3 | 3,0 | 5,8 | 12 | 174 | 46 |
| 5 | E | 0,3 | -0,7 | - | 1,4 | 1,5 | 2,6 | 3,5 | 4,7 | 8,7 | 23 | 177 | 49 |
| 6 | kein Stabilisator | - | -0,2 | 43 | 54 | | | | | | | 128 | - |

Die geprüften Muster zeigen sogar noch nach 180 Min. ausgezeichnete YI-Werte (niedrige Werte bedeuten geringe Vergilbung) sowie sehr gute Oxydationsbeständigkeitswerte.

Definition der Gemische A, B, C, D und E:

Tabelle 2

| Stabilisatorgemisch Nr. | 1:1 Gemische (in Gew.%) aus Verbindungen der Formeln | |
|---|---|---|
| A | Formel 1a { $R_1$ = $-CH_3$, $R_3$ = -H, $R_2$ = $n-C_8H_{17}$ | Formel 2 { n = 1, $R_6$ = tert.-Butyl, $R_7$ = H, $R_8$ = $CH_3$ |
| B | Formel 1a, wie bei A | Formel 4 Ar=Ar'= 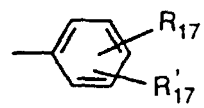 Isomerengemisch * |
| C | Formel 1a, wie bei A | Formel 4 { Ar = 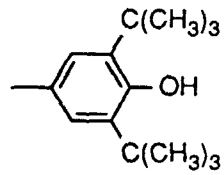 Ar' = 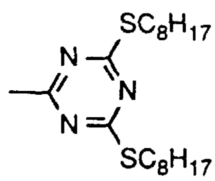 |
| | 4:1 Gemische (in Gew.%) aus Verbindungen der Formeln | |
| D | Formel 1a, wie bei A | Formel 2, wie bei A |
| E | Formel 1a, wie bei A | Formel 4 Ar=Ar'= 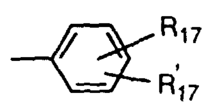 Isomerengemisch * |

* Technisches Gemisch erhalten durch Reaktion von Diphenylamin mit Diisobutylen, enthaltend 3,2 % Diphenylamin, 13,2 % Mono-t-butyldiphenylamin, 25,3 % Mono-t-octyldiphenylamin und Di-t-butyldiphenylamin, 24,2 % t-Butyl-t-octyldiphenylamin, 24,3 % Di-t-octyldiphenylamin und andere höher alkylierte Diphenylamine, wobei der Gehalt an 4,4'-Di-t-octyldiphenylamin 18,2 % beträgt und weitere kleinere Mengen an Diphenylaminen mit teilweise modifizierten Seitenketten und Polymeren auf 100 %

**Patentansprüche**

**1.** Verfahren zur Herstellung von Polyurethanstoffen durch Umsetzung von

a) Polyisocyanaten mit
b) Verbindungen enthaltend mindestens zwei gegenüber Isocyanaten reaktionsfähige Wasserstoffatome, in Gegenwart von
c) an sich bekannten Katalysatoren und
d) spezifischen Stabilisatorsystemen,

dadurch gekennzeichnet, dass als Komponente d) ein Stabilisatorsystem eingesetzt wird, das mindestens zwei Verbindungen aus mindestens zwei strukturell verschiedenen Stabilisatortypen der Formeln (1) und (2) und/oder (3) und/oder (4) enthält, wobei die Formel (1) für die Formeln (1a), (1b), (1c), (1d) oder (1e)

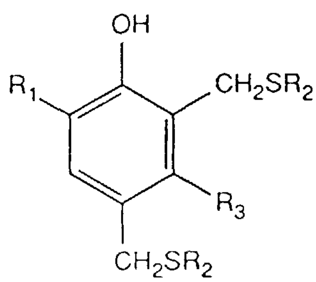 ,

(1a)

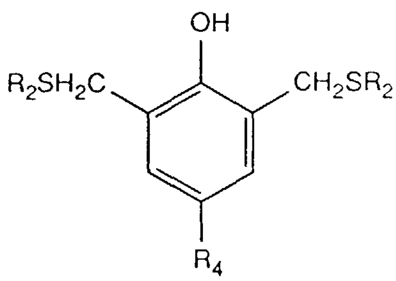 ,

(1b)

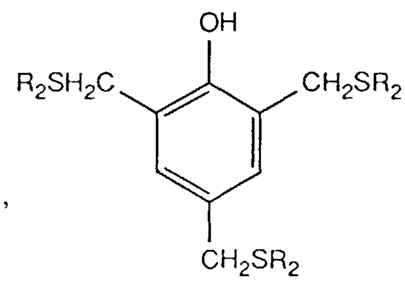 ,

(1c)

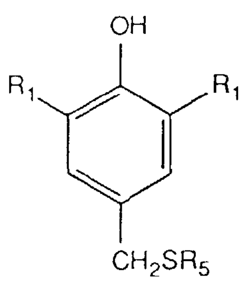 ,

(1d)

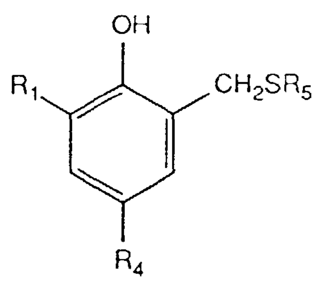

(1e)

steht,
und die übrigen Formeln (2), (3) und (4) wie folgt sind:

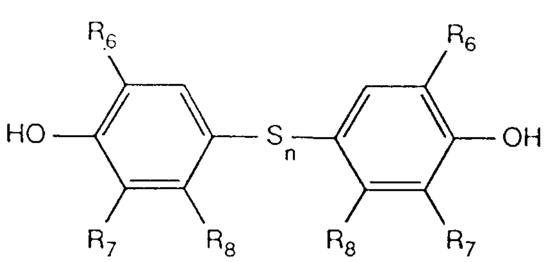 ,

(2)

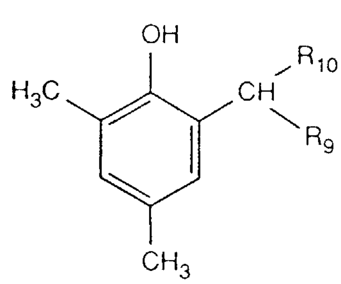 ,

(3)

Ar-NH-Ar' ,

(4)

worin
$R_1$ unabhängig voneinander $C_1$-$C_4$-Alkyl, $R_2$ und $R_5$ unabhängig voneinander $C_1$-$C_{18}$-Alkyl, $C_5$-$C_7$-Cycloalkyl, Benzyl, Phenyl oder eine Gruppe der Formel $-CH_2COO-C_6-C_{18}$-Alkyl, $R_3$ -H oder $-CH_3$, und $R_4$ $C_1$-$C_{12}$-Alkyl bedeuten, $R_6$ und $R_8$ unabhängig voneinander $C_1$-$C_{18}$-Alkyl oder $C_5$-$C_7$-Cycloalkyl, $R_7$ unabhängig voneinander -H, $C_1$-$C_4$-Alkyl oder $C_5$-$C_7$-Cycloalkyl, n die Zahl 1, 2 oder 3, $R_9$ $C_6$-$C_{18}$-Alkyl und $R_{10}$ Methyl oder Ethyl bedeuten, und Ar und Ar' unabhängig voneinander für einen Rest der Formeln

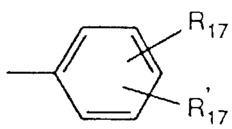 , 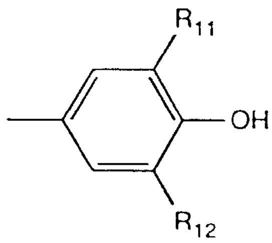 oder 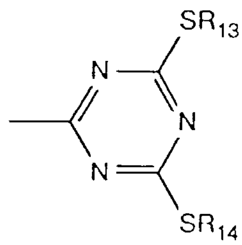

stehen, worin $R_{17}$ und $R_{17}'$ unabhängig voneinander -H oder $C_4$-$C_{18}$-Alkyl, $R_{11}$ und $R_{12}$ unabhängig voneinander $C_1$-$C_4$-Alkyl und $R_{13}$ und $R_{14}$ unabhängig voneinander $C_4$-$C_{18}$-Alkyl bedeuten.

**2.** Verfahren gemäss Anspruch 1, dadurch gekennzeichnet, dass in der Formel 1a $R_1$ $-CH_3$ oder tert.-Butyl, $R_2$ Octyl und $R_3$ -H oder $-CH_3$ bedeuten.

**3.** Verfahren gemäss Anspruch 2, worin $R_1$ $-CH_3$, $R_3$ -H und $R_2$ Octyl sind.

**4.** Verfahren gemäss Anspruch 1, dadurch gekennzeichnet, dass in der Formel 1b $R_2$ geradkettiges oder verzweigtes $C_8$-$C_{12}$-Alkyl und $R_4$ geradkettiges oder verzweigtes Nonyl bedeuten.

**5.** Verfahren gemäss Anspruch 1, dadurch gekennzeichnet, dass die $R_2$ in der Formel 1c geradkettiges oder verzweigtes $C_8$-$C_{12}$-Alkyl sind.

**6.** Verfahren gemäss Anspruch 1, dadurch gekennzeichnet, dass in der Formel 1d $R_1$ tert.-Butyl und $R_5$ geradkettiges oder verzweigtes Octyl sind.

**7.** Verfahren gemäss Anspruch 1, dadurch gekennzeichnet, dass in der Formel 2 beide $R_6$ gleich sind und $C_1$-$C_4$-Alkyl, $R_7$ -H, $R_8$ $-CH_3$ und n die Zahl 1 bedeuten.

**8.** Verfahren gemäss Anspruch 1, dadurch gekennzeichnet, dass in der Formel 3 $R_9$ geradkettiges oder verzweigtes $C_{14}$- oder $C_{16}$-Alkyl sind.

**9.** Verfahren gemäss Anspruch 1, dadurch gekennzeichnet, dass Formel 4 den folgenden Formeln

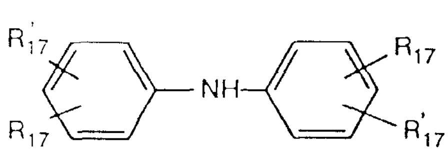 und 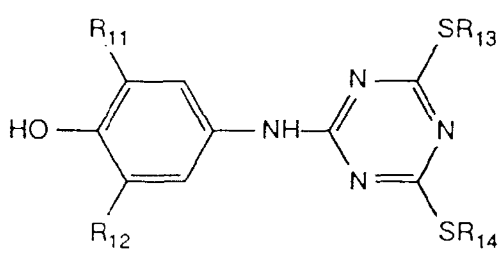

entspicht,
worin die $R_{17}$ und $R_{17}'$ gleich oder verschieden sind und $C_4$-$C_8$-Alkyl bedeuten, $R_{11}$ und $R_{12}$ tert.-Butyl und $R_{13}$ und $R_{14}$ geradkettiges oder verzweigtes Octyl bedeuten.

**10.** Verfahren gemäss Anspruch 1, dadurch gekennzeichnet. dass das Stabilisatorsystem mindestens zwei Verbindungen aus zwei Stabilisatortypen der Formeln 1a und 2 oder 1a und 4.

**11.** Verfahren gemäss Anspruch 1, dadurch gekennzeichnet, dass das Stabilisatorsystem flüssig ist.

**12.** Verfahren gemäss Anspruch 1, dadurch gekennzeichnet, dass als Polyisocyanat das 2,4- und 2,6-Toluylendiisocyanat sowie Gemische dieser Isomeren ("TDI"), Polyphenylpolymethylen-polyisocyanate, wie sie durch Anilin-Formaldehyd-Kondensation und anschliessende Phosgenierung hergestellt werden ("rohes MDI"), oder Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate") verwendet werden.

**13.** Verfahren gemäss Anspruch 1, dadurch gekennzeichnet, dass als Komponente b) Hydroxylgruppen aufweisende verzweigte oder lineare Polyester, Polyacetale, Polyether oder Polythioether-Adiprene verwendet werden.

**14.** Verfahren gemäss Anspruch 1, wonach Polyurethanschaumstoffe hergestellt werden.

**15.** Verfahren gemäss Anspruch 1, dadurch gekennzeichnet, dass zusätzlich ein Treibmittel zugesetzt wird.

**16.** Verwendung der Systeme (Komponente d) gemäss Anspruch 1 als Stabilisatoren bei der Herstellung von Polyurethanstoffen oder für die zu deren Herstellung benötigte Komponente b).

**17.** Stabilisierte Zusammensetzung enthaltend

A) einen Polyurethanstoff und
B) ein Stabilisatorsystem das mindestens zwei Verbindungen aus mindestens zwei strukturell verschiedenen Stabilisatortypen der Formel 1 und 2 und/oder 3 und/oder 4 enthält wie es in Anspruch 1 definiert ist.

## Claims

**1.** A process for the preparation of polyurethane substances by reaction of

a) polyisocyanates with
b) compounds comprising at least two hydrogen atoms that are reactive towards isocyanates, in the presence of
c) catalysts known per se and
d) specific stabiliser systems,

wherein there is used as component d) a stabiliser system comprising at least two compounds of at least two structurally different stabiliser types of formulae (1) and (2) and/or (3) and/or (4), in which formula (1) represents formulae (1a), (1b), (1c), (1d) or (1e)

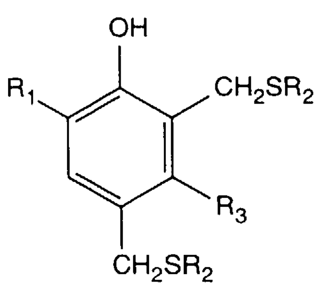 ,

(1a)

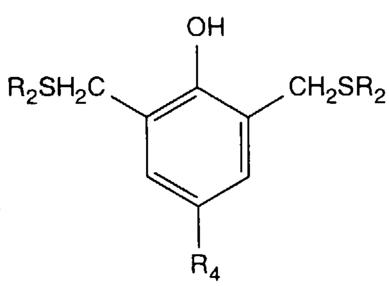 ,

(1b)

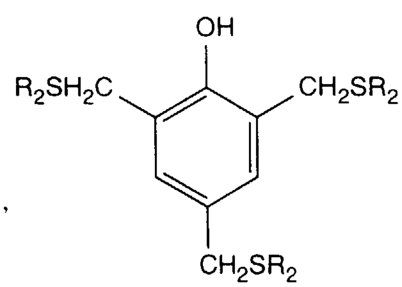 ,

(1c)

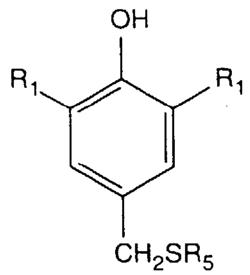,
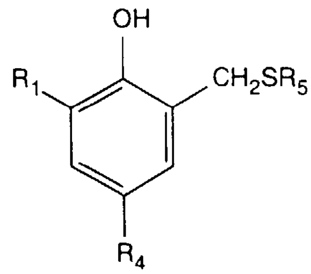,

(1d) (1e)

and the other formulae (2), (3) and (4) are as follows:

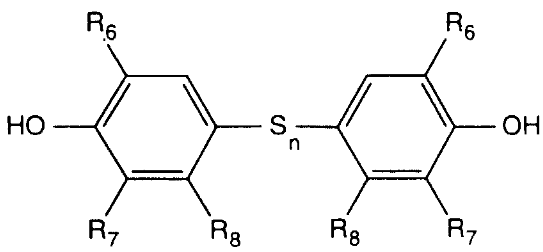,
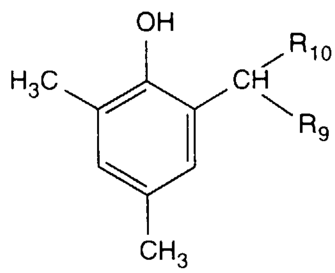
, Ar-NH-Ar' ,

(2) (3) (4)

wherein
$R_1$ each independently of the other is $C_1$-$C_4$alkyl, $R_2$ and $R_5$ each independently of the other are $C_1$-$C_{18}$alkyl, $C_5$-$C_7$cycloalkyl, benzyl, phenyl or a group of the formula -$CH_2COO$-$C_6$-$C_{18}$alkyl, $R_3$ is -H or -$CH_3$, and $R_4$ is $C_1$-$C_{12}$alkyl, $R_6$ and $R_8$ each independently of the other are $C_1$-$C_{18}$alkyl or $C_5$-$C_7$cycloalkyl, $R_7$ each independently of the other is -H, $C_1$-$C_4$alkyl or $C_5$-$C_7$cycloalkyl, n is the number 1, 2 or 3, $R_9$ is $C_6$-$C_{18}$alkyl and $R_{10}$ is methyl or ethyl, and Ar and Ar' each independently of the other are a radical of the formula

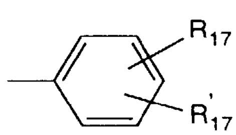,
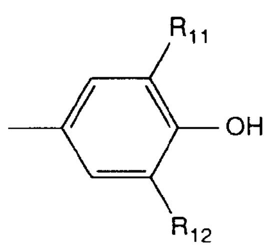 or
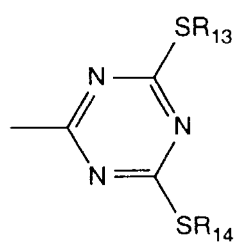,

wherein
$R_{17}$ and $R_{17}$' each independently of the other are -H or $C_4$-$C_{18}$alkyl, $R_1$ and $R_{12}$ each independently of the other are $C_1$-$C_4$alkyl, and $R_{13}$ and $R_{14}$ each independently of the other are $C_4$-$C_{18}$alkyl.

**2.** A process as claimed in claim I wherein in formula Ia $R_1$ is -$CH_3$ or tert-butyl, $R_2$ is octyl and $R_3$ is -H or -$CH_3$.

**3.** A process as claimed in claim 2 wherein $R_1$ is -$CH_3$, $R_3$ is -H and $R_2$ is octyl.

**4.** A process as claimed in claim 1 wherein in formula 1b $R_2$ is straight-chain or branched $C_8$-$C_{12}$alkyl and $R_4$ is straight-chain or branched nonyl.

**5.** A process as claimed in claim 1 wherein in formula 1c $R_2$ is straight-chain or branched $C_8$-$C_{12}$alkyl.

**6.** A process as claimed in claim 1 wherein in formula 1d $R_1$ is tert-butyl and $R_5$ is straight-chain or branched octyl.

**7.** A process as claimed in claim 1 wherein in formula 2 the two radicals $R_6$ are identical and are $C_1$-$C_4$alkyl, $R_7$ is -H, $R_8$ is -$CH_3$ and n is the number 1.

**8.** A process as claimed in claim I wherein in formula 3 $R_9$ is straight-chain or branched $C_{14}$alkyl or $C_{16}$alkyl.

**9.** A process as claimed in claim 1 wherein formula 4 corresponds to the following formulae

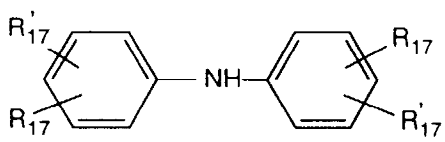
and
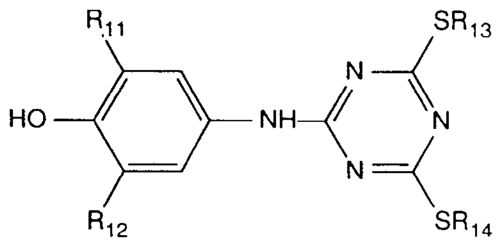
,

wherein $R_{17}$ and $R_{17}'$ are identical or different and are $C_4$-$C_8$alkyl, $R_1$ and $R_{12}$ are tert-butyl and $R_{13}$ and $R_{14}$ are straight-chain or branched octyl.

**10.** A process as claimed in claim 1 wherein the stabiliser system comprises at least two compounds of two stabiliser types of formulae 1a and 2 or 1a and 4.

**11.** A process as claimed in claim 1 wherein the stabiliser system is liquid.

**12.** A process as claimed in claim 1 wherein there is used as polyisocyanate 2,4- or 2,6-tolylene diisocyanate or a mixture of those isomers ("TDI"), a polyphenyl-polymethylene polyisocyanate, such as those prepared by aniline-formaldehyde condensation and subsequent phosgenation ("crude MDI"), or a polyisocyanate comprising carbodiimide groups, urethane groups, allophanate groups, isocyanurate groups, urea groups or biuret groups ("modified polyisocyanate").

**13.** A process as claimed in claim 1 wherein there is used as component b) a hydroxy-group-containing branched or linear polyester, polyacetal, polyether or polythioether adiprene.

**14.** A process as claimed in claim 1 in which a polyurethane foam is prepared.

**15.** A process as claimed in claim 1 wherein a blowing agent is added.

**16.** Use of a system (component d) as claimed in claim 1 as stabiliser in the preparation of polyurethane substances or for component b) required for the preparation thereof.

**17.** A stabilised composition comprising

A) a polyurethane substance and
B) a stabiliser system that comprises at least two compounds of at least two structurally different stabiliser types of formulae 1 and 2 and/or 3 and/or 4 as defined in claim 1.

**Revendications**

**1.** Procédé pour la préparation de polyuréthanne par réaction

a) de polyisocyanates avec
b) des composés contenant au moins deux hydrogènes réactifs sur des isocyanates, en présence

c) de catalyseurs connus en soi, et
d) de systèmes de stabilisants spécifiques,

caractérisé en ce que l'on utilise comme composant d) un système de stabilisants qui contient au moins deux composés d'au moins deux types de stabilisants avec une structure différente de formule (1) et (2) et/ou (3) et/ou (4), la formule (1) répondant aux formules (1a), (1b), (1c), (1d) ou (1e)

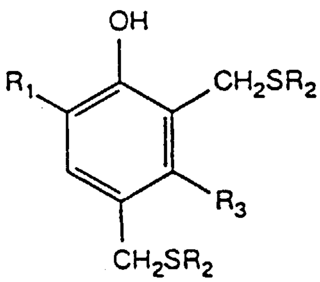 , 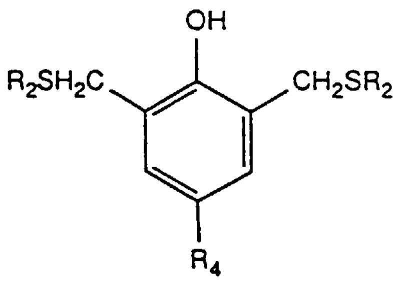 , 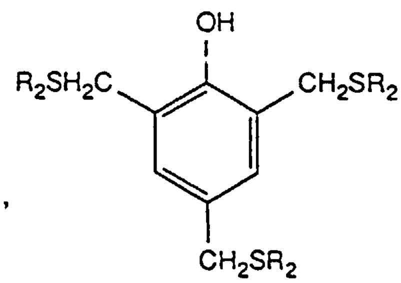 ,

(1a) (1b) (1c)

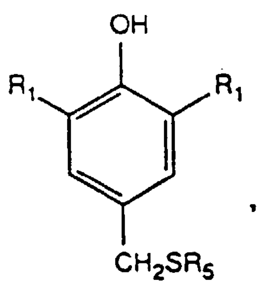 , 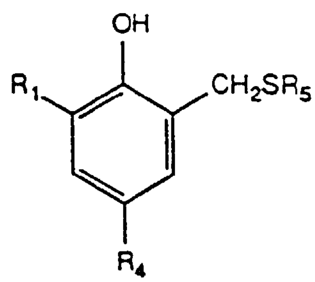

(1d) (1e)

et les autres formules (2), (3) et (4) sont les suivantes :

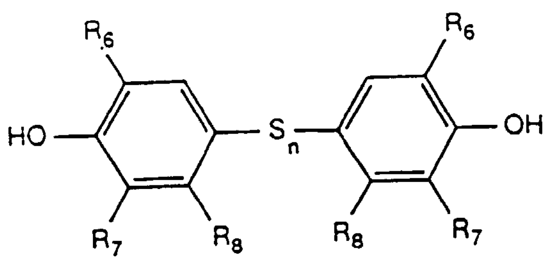 , 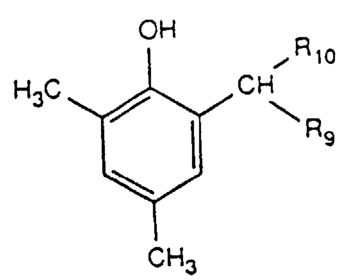 , Ar-NH-Ar' ,

(2) (3) (4)

dans lesquelles
les restes $R_1$, indépendamment les uns des autres, représentent un groupe alkyle en $C_1$-$C_4$, $R_2$ et $R_5$, indépendamment l'un de l'autre, représentent des groupes alkyle en $C_1$-$C_{18}$, cycloalkyle en $C_5$-$C_7$, benzyle, phényle, ou un groupe de formule $-CH_2COO-$(alkyle en $C_6$-$C_{18}$), $R_3$ représente un atome d'hydrogène ou $-CH_3$, et $R_4$ représente un groupe alkyle en $C_1$-$C_{12}$, $R_6$ et $R_8$, indépendamment l'un de l'autre, représentent des groupes alkyle en $C_1$-$C_{18}$ ou cycloalkyle en $C_5$-$C_7$, les restes $R_7$, indépendamment l'un de l'autre, représentent un atome d'hydrogène, un groupe alkyle en $C_1$-$C_4$ ou cycloalkyle en $C_5$-$C_7$, n vaut 1, 2 ou 3, $R_9$ représente un groupe alkyle en $C_6$-$C_{18}$ et

$R_{10}$ représente un groupe méthyle ou éthyle, et Ar et Ar', indépendamment l'un de l'autre, représentent un groupe de formule

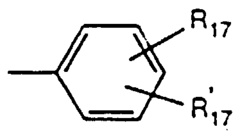 , 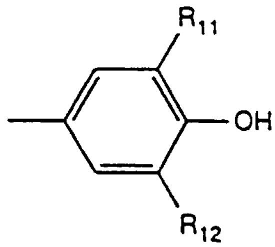 ou 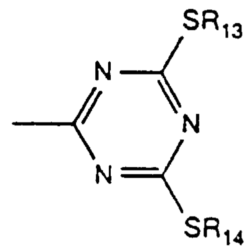

dans laquelle
$R_{17}$ et $R'_{17}$, indépendamment l'un de l'autre, représentent un atome d'hydrogène ou un groupe alkyle en $C_4$-$C_{18}$, $R_{11}$ et $R_{12}$, indépendamment l'un de l'autre, représentent un groupe alkyle en $C_1$-$C_4$ et $R_{13}$ et $R_{14}$, indépendamment l'un de l'autre, représentent un groupe alkyle en $C_4$-$C_{18}$.

**2.** Procédé selon la revendication 1, caractérisé en ce que dans la formule 1a, $R_1$ représente $-CH_3$ ou le groupe tert-butyle, $R_2$ représente un groupe octyle et $R_3$ représente un atome d'hydrogène ou $-CH_3$.

**3.** Procédé selon la revendication 2, où $R_1$ représente $-CH_3$, $R_3$ représente un atome d'hydrogène et $R_2$ représente un groupe octyle.

**4.** Procédé selon la revendication 1, caractérisé en ce que dans la formule 1b, $R_2$ représente un groupe alkyle en $C_8$-$C_{12}$ linéaire ou ramifié et $R_4$ représente un nonyle linéaire ou ramifié.

**5.** Procédé selon la revendication 1, caractérisé en ce que dans la formule 1c, R2 représente un groupe alkyle en $C_8$-$C_{12}$ linéaire ou ramifié.

**6.** Procédé selon la revendication 1, caractérisé en ce que dans la formule 1d, $R_1$ représente un groupe tert-butyle et R5 représente un groupe octyle linéaire ou ramifié.

**7.** Procédé selon la revendication 1, caractérisé en ce que dans la formule 2, les deux radicaux $R_6$ sont identiques et représentent un groupe alkyle en $C_1$-$C_4$, $R_7$ représente un atome d'hydrogène, $R_8$ représente $-CH_3$ et n vaut 1.

**8.** Procédé selon la revendication 1, caractérisé en ce que dans la formule 3, $R_9$ est un groupe alkyle en $C_{14}$ ou $C_{16}$ linéaire ou ramifié.

**9.** Procédé selon la revendication 1, caractérisé en ce que la formule 4 répond aux formules suivantes :

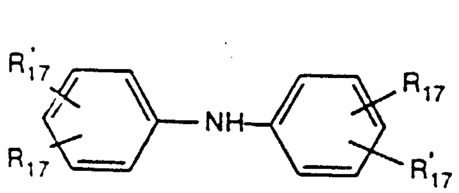 et 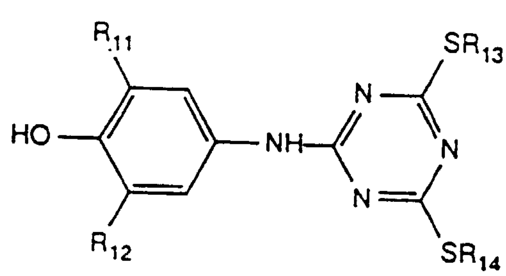

dans lesquelles $R_{17}$ et $R_{17}$' sont identiques ou différents et représentent un groupe alkyle en $C_4$-$C_8$, $R_{11}$ et $R_{12}$ représentent un groupe tert-butyle et $R_{13}$ et $R_{14}$ un groupe octyle linéaire ou ramifié.

**10.** Procédé selon la revendication 1, caractérisé en ce que le système de stabilisants comporte au moins deux composés à partir de deux types de stabilisants de formules la et 2 ou la et 4.

**11.** Procédé selon la revendication 1, caractérisé en ce que le système de stabilisants est liquide.

12. Procédé selon la revendication 1, caractérisé en ce que l'on utilise comme polyisocyanate le 2,4- et 2,6-toluylène-diisocyanate, ainsi que des mélanges de ces isomères ("TDI"), des polyphényl-polyméthylène-polyisocyanates, préparés par condensation d'aniline-formaldéhyde et par phosgénisation ultérieure ("MDI brut") ou des polyisocyanates présentant des groupes carbodiimide, uréthanne, allophanate, isocyanurate, urée ou biuret ("polyisocyanates modifiés").

13. Procédé selon la revendication 1, caractérisé en ce que l'on utilise comme composant b) des polyacétals, des polyéthers, des polyéther-adiprènes ou des polyesters linéaires ou ramifiés présentant des groupes hydroxyle.

14. Procédé selon la revendication 1, selon lequel on prépare des polyuréthannes mousse.

15. Procédé selon la revendication 1, caractérisé en ce que l'on ajoute en plus un porogène.

16. Utilisation des systèmes (composant d) selon la revendication 1 comme stabilisants dans la préparation de polyuréthannes ou du composant b) nécessaire à leur préparation.

17. Composition stabilisée contenant

    A) un polyuréthanne et
    B) un système de stabilisants qui contient au moins deux composés de stabilisantsayant une structure différente de formules 1 et 2 et/ou 3 et/ou 4, défini dans la revendication 1.